# FASCICULE DE BREVET EUROPEEN

(11) **EP 1 775 148 B1**
(45) Date de publication et mention de la délivrance du brevet: **18.01.2012**
(21) Numéro de dépôt: 06076837.1
(22) Date de dépôt: 05.10.2006
(51) Int. Cl.: B60C 25/02, B60C 25/132

(54) **Outillage auxiliaire pour le montage d'un pneu sur une jante**
Hilfswerkzeug für die Montage eines Reifens auf eine Felge
Auxiliary tool for mounting a tyre onto a rim

(30) Priorité: 12.10.2005 BE 200500501
(43) Date de publication de la demande: 18.04.2007
(73) Titulaire: Du Quesne, Bertrand, 1030 Brussel (BE)
(72) Inventeur: Du Quesne, Bertrand, 1030 Brussel (BE)
(74) Mandataire: Donné, Eddy

(56) Documents cités:
- EP-A- 0 524 651
- GB-A- 1 467 072
- US-A- 2 667 212
- US-A- 3 717 193
- US-A- 4 589 462
- US-A- 4 919 184
- US-B1- 6 273 171

## Description

La présente invention concerne un outillage auxiliaire pour le montage d'un pneu sur une jante, par exemple: d'une roue de voiture, de camion ou d'un autre véhicule.

Il est connu que pour le montage d'un pneu sur une jante, on utilise généralement une machine destinée à cet effet, comme décrit par exemple dans le brevet européen 0.909.667, sur laquelle, on fixe d'abord la jante puis on y pose le pneu au moyen d'un levier qui pousse ce pneu vers le bas tandis que la jante est entraînée en rotation autour de son axe, de telle sorte que le talon du pneu est tiré par-dessus du bord externe de la jante et que ce talon est ainsi enfoncé dans le creux de la jante.

D'autres machines de ce type sont décrites dans les documents GB 1.467.072, US 2.667.212 et US 4.589.462.

Bien qu'une machine de ce type, pour le montage d'un pneu classique, s'avère très utile, des problèmes se posent lors du montage de ce que l'on appelle des pneus à taille basse ou des pneus à flancs porteurs, ceux-ci permettant le roulage à plat.

En effet, les flancs de ce type de pneu sont renforcés, si bien que, pour enfoncer le talon du pneu dans le creux de la jante, lors du montage, des forces intenses sont nécessaires de telle sorte que ledit pneu subit des déformations locales sous l'action du levier précité, pouvant donner lieu à des dégradations du pneu et/ou de la jante.

La machine précitée n'a pas été conçue, à l'origine pour le montage de ce type de pneus renforcés.

C'est pour cela que, dans bien des cas, les monteurs de pneus utilisent des leviers supplémentaires ou des accessoires qui se fixent à la jante, par exemple.

Dans tous ces cas, le montage de pneus à taille basse ou à flancs porteurs reste difficile et requiert de la part du monteur, du métier et de l'habileté.

Le risque d'occasionner des dégradations au pneu et à la jante, dus à des tensions locales, est certain.

Des mécanismes spéciaux ont été imaginés, pour le montage de ce type de pneus renforcés, et appliqués comme accessoire sur la machine précitée, mécanismes faisant usage par exemple de guidages et de cylindres hydrauliques ou pneus supplémentaires.

Toutefois, l'inconvénient lié à ces mechanismes réside dans le fait qu'ils sont relativement complexes et coûteux.

L'invention a pour objet un outillage auxiliaire qui, lors du montage d'un pneu sur une jante au moyen d'une machine de montage de pneu précitée, plus spécifiquement d'un pneu à taille basse ou à flancs porteurs, exclut un ou plusieurs des inconvénients précités et qui en outre est de construction très simple et de manipulation aisée, sans exiger une habilité particulière de la part du monteur.

À cet effet, l'invention concerne un outillage auxiliaire selon la revendication 1.

Lors du montage du pneu sur la jante, l'outillage auxiliaire selon l'invention est d'abord placé à la main sur le talon du pneu et les extrémités libres de ses dents poussées sous le bord externe de la jante, ce qui comprime légèrement le flanc du dit pneu ; après quoi, le montage du pneu a lieu conformément aux procédés connus en utilisant une machine connue pour cet usage, l'outillage auxiliaire, grâce au pincement entre le talon du pneu et le bord de la jante, tournant de concert avec la jante et avec le pneu, enfonce le talon du pneu vers le bas à l'endroit occupé par une des dents externes de l'outillage auxilliaire, si bien que le montage du pneu se déroule de lui-même.

Conformément à une forme de réalisation préférée, l'outillage auxiliaire est muni de trois dents, la dent médiane étant plus courte que les dents externes et les extrémités libres des dents étant situées sur une circonférence dont le rayon est de l'ordre de grandeur du rayon de la circonférence de la jante sur laquelle le pneu doit être monté, une des dents, de préférence la dent médiane, formant un angle avec le plan qui est déterminé par les deux autres dents.

Un avantage lié à cette forme de réalisation réside dans le fait que l'outillage auxiliaire reste automatiquement en place, au cours du montage du pneu, si bien que l'intervention du monteur reste très limitée, voire superflue.

Dans le but de mieux indiquer les caractéristiques de l'invention, ci-après, on décrit, à titre d'exemple et sans aucun caractère limitatif, un certain nombre de formes de réalisation préférées d'un outillage auxiliaire selon l'invention pour le montage d'un pneu sur une jante, en se référant aux dessins annexés dans lesquels :
la figure 1 est une vue prise d'en haut d'un outillage auxiliaire selon l'invention ;
la figure 2 représente une vue prise le long de la flèche F2 de la figure 1 ;
la figure 3 représente une vue en coupe transversale prise le long de la ligne III-III de la figure 2 ;
la figure 4 représente une machine existante pour le montage d'un pneu sur une jante ;
la figure 5 représente une vue prise d'en haut selon la flèche F5 de la figure 4, dans laquelle on adapte un outillage auxiliaire selon l'invention au cours du montage d'un pneu sur une jante ;
la figure 6 représente une vue analogue à celle de la figure 5, mais pour une autre étape au cours du montage du pneu sur la jante;
la figure 7 représente une vue en perspective prise le long de la flèche F7 de la figure 6 ;
les figures 8 et 9 représentent, dans une vue prise d'en haut, deux variantes possibles d'un outillage auxiliaire selon l'invention.

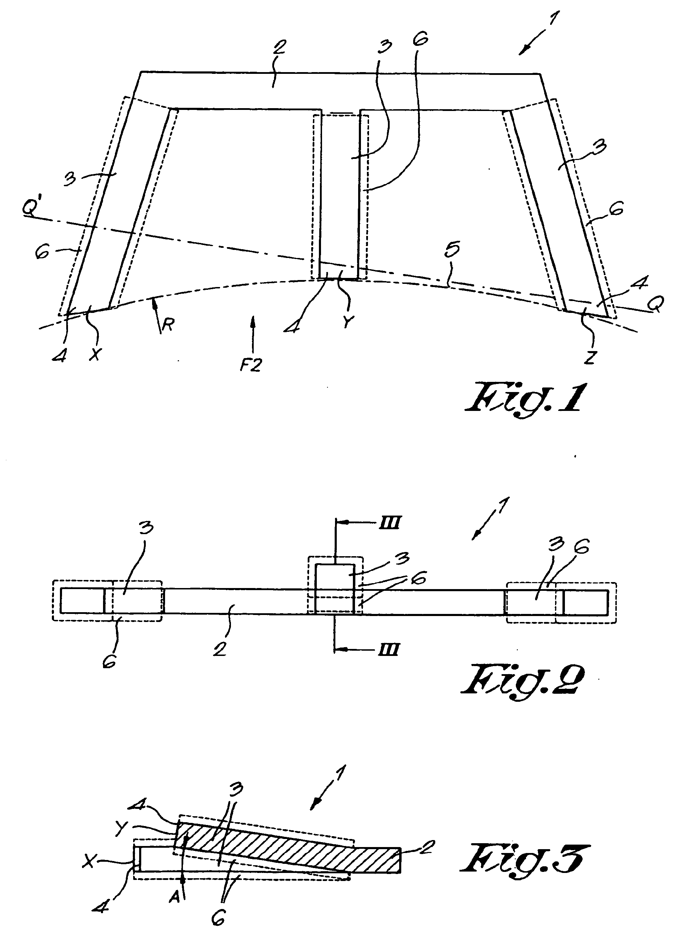

Dans les figures 1 à 3, on représente un outillage auxiliaire 1, plus spécifiquement un outillage à main, selon l'invention qui, dans le cas présent, est réalisé sous la forme d'un peigne comportant une base 2 et trois dents 3 disposées transversalement sur ladite base, la dent médiane 3 étant disposée perpendiculairement à la base 2, tandis que les dents externes 3 sont implantées obliquement sur la base 2 et forment un angle avec la dent médiane 3, de telle sorte que les dents externes 3 s'écartent les unes des autres, et divergent donc par leurs extrémités libres 4.

Toutefois, il n'est pas exclu de prévoir des dents parallèles dans une forme de réalisation donnée en variante

Dans l'exemple représenté, la dent médiane 3 est plus courte que les dents externes 3 et les extrémités libres 4 des dents 3 sont situées sur une circonférence imaginaire 5 dont le rayon R est de l'ordre de grandeur du rayon moyen de la jante sur laquelle un pneu doit être monté, de telle sorte que l'outillage auxiliaire 1 peut être utilisé pour plusieurs dimensions de pneus et de jantes.

La distance des extrémités libres 4 des dents 3 couvre une partie substantielle de la circonférence 5, par exemple une partie qui correspond à un segment de cercle de 50°.

De préférence, l'extrémité libre d'une des dents 3 est située en dehors du plan qui est déterminé par les deux autres dents 3.

Dans l'exemple représenté, cette caractéristique est mise en oeuvre par le fait que la dent médiane 3 est orientée vers le haut et forme un angle A avec le plan précité des autres dents 3 ; cette caractéristique peut également être mise en oeuvre par le fait que la dent 3 en question est réalisée pour être plus épaisse que les autres dents 3.

En variante, l'extrémité libre 4 d'une dent externe 3 peut par exemple faire saillie vers le haut ou vers le bas par rapport aux extrémités des autres dents 3.

Les dents 3 de l'outillage auxiliaire 1 sont munies, que ce soit en tout ou en partie, d'un revêtement protecteur en caoutchouc ou analogue. Il n'est pas exclu de munir la totalité de l'outillage auxiliaire 1 d'un revêtement protecteur de ce type.

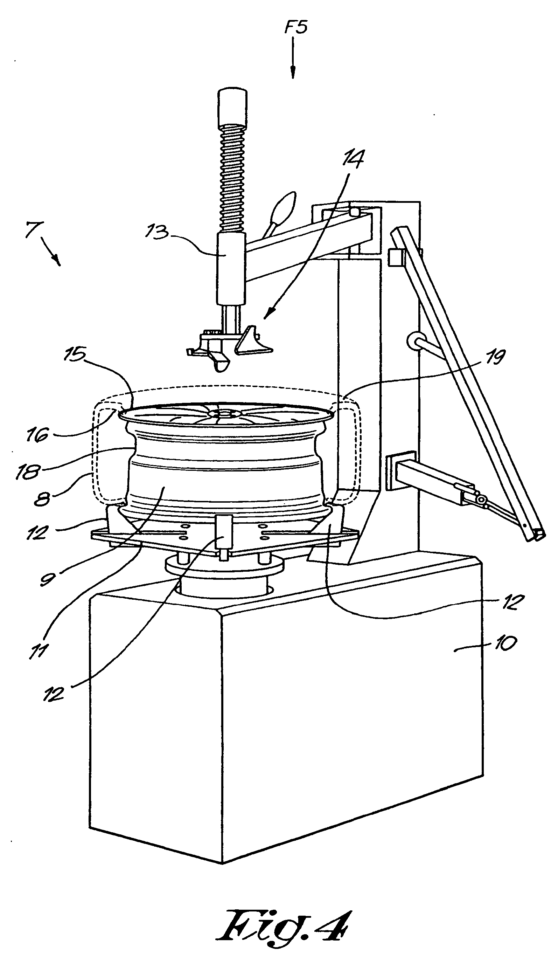

L'outillage auxiliaire 1 est destiné à être utilisé en combinaison avec une machine existante 7, par exemple comme décrit dans le document EP 0.909.667 et comme représenté dans la figure 4, pour le montage d'un pneu 8 sur une jante 9, en particulier lorsque le pneu 8 qui doit être monté est du type à taille basse ou à flancs porteurs renforcés, prévu pour le roulage à plat.

Sans entrer dans les détails, une machine de montage de pneus 7 de ce type est constituée principalement par un bâti 10 ; par une table rotative 11 disposée sur ce bâti 10, qui est munie de pinces 12 avec lesquelles on fixe la jante 9 sur la table rotative 11 ; par une colonne 13 qui porte un outil 14 qui peut venir se placer proche du bord externe supérieur 15 de la jante 9.

Pour le montage d'un pneu 8 sur une jante 9, celle-ci est d'abord fixée sur la table rotative 11 ; après quoi, d'une manière connue, le pneu 8 est tiré, avec son talon inférieur 16 par-dessus le bord externe supérieur 15 de la jante 9, comme on le représente en figure 4, ce qui peut être réalisé en l'absence de l'outillage auxiliaire 1.

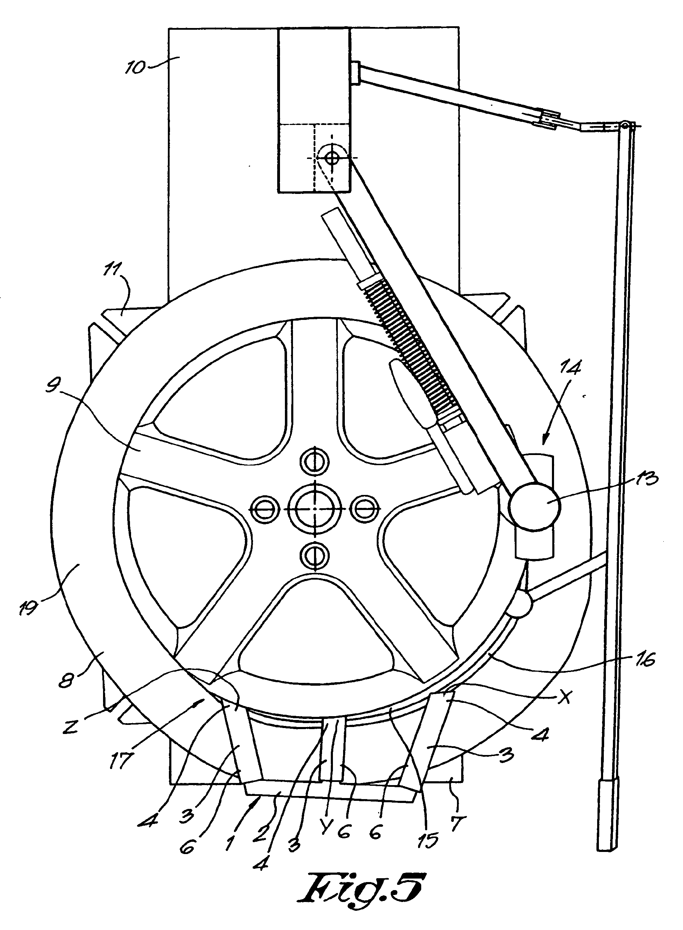

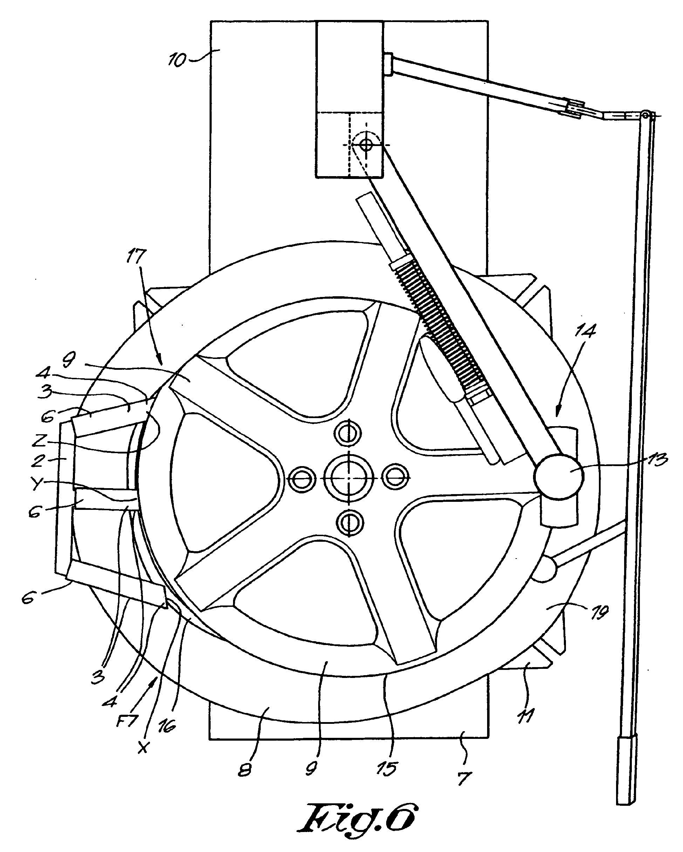

Ensuite, pour le montage ultérieur du talon supérieur du pneu 8 sur la jante 9, on fait usage de l'outillage auxiliaire 1 selon l'invention, comme illustré en se référant aux figures 5 à 7.

En premier lieu, l'outillage 14 de la machine de montage de pneu 7 est réglé de manière connue pour l'emploi.

Ensuite, l'outillage auxiliaire 1 vient se placer sur le talon supérieur 16 du pneu 8 et ce talon 16 est poussé vers le bas à la main avec l'outillage auxiliaire 1 afin de pousser en même temps l'outillage auxiliaire 1 avec les extrémités libres 4 de ses dents 3 entre le flanc 19 du pneu 8 et le bord externe supérieur 15 de la jante.

Après le relâchement du pneu 8 et de l'outillage auxiliaire 1, le talon 16 du pneu 8 se redresse élastiquement, si bien que l'outillage auxiliaire 1 est pincé entre le talon 16 du pneu 8 et le bord externe 15 de la jante 9, si bien que, avant tout, la dent externe gauche 3, à hauteur de l'endroit 17 où le talon 16 du pneu 8 s'étend en inclinaison par-dessus le bord externe 15, est saisie entre le talon 16 du pneu 8 et la jante 9.

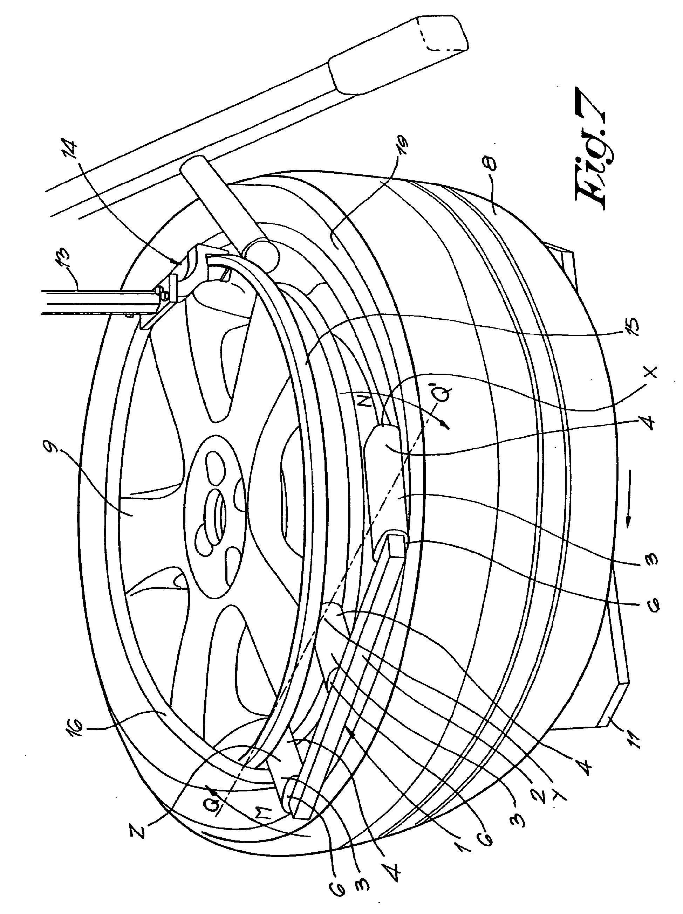

Grâce à la force élastique M orientée vers le haut qu'exerce le pneu 8 comme indiquée dans la figure 7, l'outillage auxiliaire 1 est poussé vers le haut, plus du côté gauche que du côté droit, puisque le pneu 8 s'étend vers le haut en inclinaison sur son côté gauche. Cette force exercée par le pneu 8 sur l'outillage auxiliaire 1 crée un moment autour l'axe Q-Q' qui relie l'extrémité libre 4 de la dent gauche 3 avec l'extrémité libre 4 de la dent médiane 3.

Ainsi, l'outillage auxiliaire 1 bascule pour ainsi dire autour de cet axe Q-Q' et autour de la dent médiane 3 qui fait office de point d'appui, si bien que l'extrémité libre 4 de la dent droite 3 bascule vers le bas puisque cette extrémité 4 se situe de l'autre côté de l'axe Q-Q' par rapport à la force M exercée par le pneu 8 sur l'outillage 1.

Dès lors l'extrémité libre 4 de la dent droite 3 exerce une force N sur le talon 16 du pneu 8 comme indiqué dans la figure 7 et enfonce le talon 16 du pneu 8 à cet endroit vers le bas pour parvenir dans le creux 18 de la jante 9.

On notera que la force N exercée par l'extrémité 4 de la dent droite 3 sur le talon 16 du pneu 8 est proportionnelle à la force élastique M du pneu 8 sur l'outillage 1 et donc proportionnelle à la résistance élastique du pneu 8.

Une fois que l'outillage auxiliaire 1 est placé de la manière précitée, le montage ultérieur a lieu de la manière connue, de telle sorte que la machine 7 est entraînée et le talon 16, via la rotation de la jante 9, est tiré davantage par-dessus le bord externe 15 de la jante 9.

En l'occurrence, l'outillage auxiliaire 1 est maintenu en place par le fait que la dent gauche 3 est fermement coincée entre le talon du pneu 8 et la jante 9.

Par le fait que la dent médiane 3 est plus courte que les dents externes 3, les forces ascendantes qu'exerce le pneu 8 sur les extrémités 4 des dents externes 3 font en sorte que l'on obtient un moment de force autour du point d'appui qui est formé par l'extrémité 4 de la dent médiane 3, moment de force qui pousse l'outillage auxiliaire 1 contre le flanc 19.

Grâce au fonctionnement de l'outillage auxiliaire 1, le montage ultérieur se déroule automatiquement sans autre intervention humaine.

À partir de ce qui précède, il apparaît clairement que les extrémités 4 des dents 3 font office de points d'appui X, Y, Z, le point d'appui Z faisant office de serrage de l'outillage auxiliaire 1, tandis que le point d'appui X fait office d'endroit de compression pour pousser le talon 16 du pneu 8 jusque dans le creux de la jante 18.

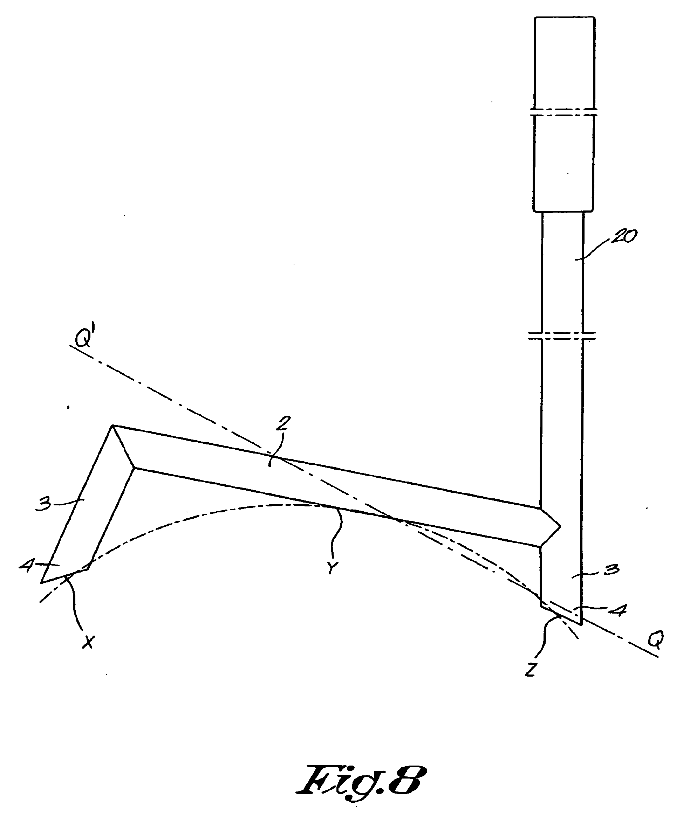

En figure 8, on représente une variante d'un outillage auxiliaire 1 selon l'invention qui, dans ce cas-ci, est réalisé sous la forme d'une fourche comportant un manche 20 et deux dents 3.

Les points d'appui X, Y, Z sont formés, dans ce cas-ci, respectivement par les extrémités 4 des dents 3 et par un point d'appui central Y sur la base 2 qui théoriquement peut être considérée comme une extrémité d'une dent sans longueur.

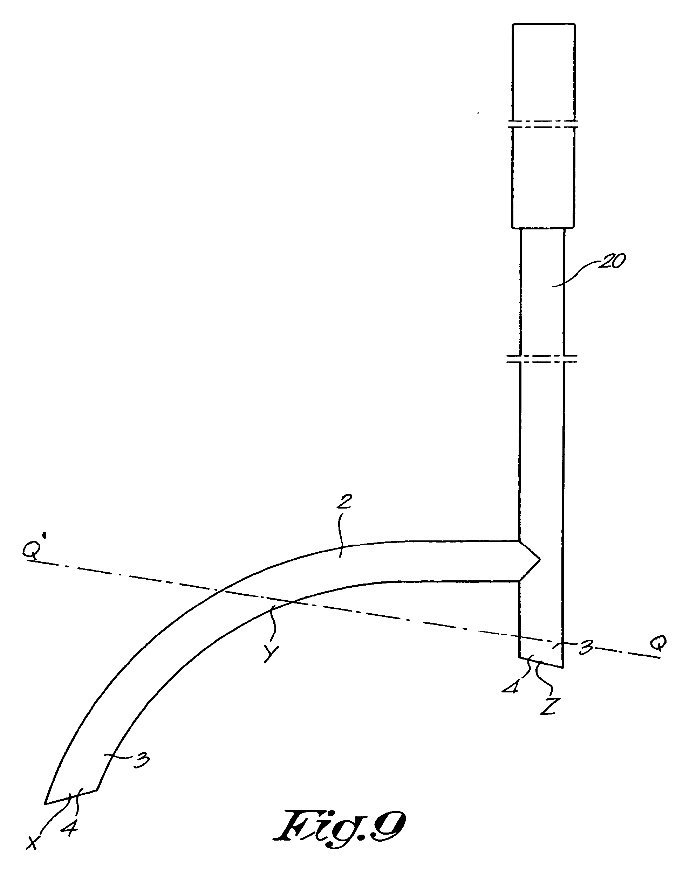

En figure 9, on représente une autre variante d'un outillage auxiliaire 1 selon l'invention, qui est réalisé de manière analogue à celui de la figure 8, mais dans lequel une dent 3 présente une forme courbe épousant celle d'un segment de cercle, dont le rayon R est de l'ordre de grandeur du diamètre de la jante 9.

Il est clair que l'outillage auxiliaire 1 peut, le cas échéant, faire partie de la machine de montage de pneus 7 en y fixant l'outillage auxiliaire 1 d'une manière ou d'une autre.

La présente invention n'est en aucune manière limitée aux formes de réalisation décrites à titre d'exemple et représentées dans les figures ; un outillage auxiliaire selon l'invention pour le montage d'un pneu sur une jante peut être réalisé dans toutes sortes de formes et dans toutes sortes de dimensions, sans sortir du cadre de l'invention.

## Revendications

1. Outillage auxiliaire pour le montage d'un pneu (8) sur une jante (9), plus spécialement pour maintenir le talon (16) du pneu (8) par-dessus le bord externe (15) de la jante (9) et d'enfoncer ce talon (16) dans le creux de la jante (9), **caractérisé en ce qu'**il est constitué principalement d'un corps avec une partie principalement plate, comprenant au moins trois points d'appui (X,Y,Z), deux dents externes et un partie centrale et **en ce que** un point d'appui externe (X) se situe de l'autre côté de l'axe (Q-Q') qui relie l'autre point d'appui externe (Z) avec le point d'appui central par rapport à la force (M) exercée par le pneu (8) sur l'outillage (1).

2. Outillage auxiliaire selon la revendication 1, **caractérisé en ce qu'**il est constitué principalement d'un corps en forme de fourche ou en forme de peigne, comprenant aux moins trois dents (3) dont les extrémités (4) font office de points d'appui (X, Y, Z).

3. Outillage auxiliaire selon la revendication 2, **caractérisé en ce que**, vis-à-vis de l'extrémité libre (4) de la dent médiane (3) l'extrémité (4) d'une dent extérieure (3) se situe dans une position plus au moins diamétralement opposée.au point d'application de la force (M) exercée par le pneu (8) sur l'outillage (1).

4. Outillage auxiliaire selon les revendications 2 ou 3 précédentes, **caractérisé en ce que** la dent médiane (3) est plus courte que les dents externes (3).

5. Outillage auxiliaire selon les revendications 2 ou 3 précédentes, **caractérisé en ce que** les points d'appui (X, Y, Z) sont situées sur une circonférence imaginaire (5) dont le rayon (R) est de l'ordre de grandeur du rayon de la circonférence de la jante (9) sur lequel le pneu (8) doit être monté.

6. Outillage auxiliaire selon l'une quelconque des revendications précédentes, **caractérisé en ce que** l'extrémité libre (4) d'une des dents (3) est située en dehors du plan qui est déterminé par les deux autres dents (3).

7. Outillage auxiliaire selon les revendications 2-6 précédentes, **caractérisé en ce que** la dents externe (3) forme un angle (A) avec le plan qui est déterminé par les autres dents (3).

8. Outillage auxiliaire selon l'une quelconque des revendications précédentes, **caractérisé en ce que** les dents externes (3) divergent.

9. Outillage auxiliaire selon l'une quelconque des revendications précédentes, **caractérisé en ce qu'**une des dents externes (3) prend une forme courbe épousant celle d'un segment de cercle dont le rayon (R) est de l'ordre de grandeur du rayon de la jante (9) sur laquelle le pneu (8) doit être monté.

10. Outillage auxiliaire selon l'une quelconque des revendications précédentes, **caractérisé en ce que** les dents (3) sont munies, au moins en partie, d'un revêtement protecteur (6) en caoutchouc ou analogue.

11. Outillage auxiliaire selon l'une quelconque des revendications précédentes, **caractérisé en ce qu'**il s'agit d'un outillage auxiliaire à main.

12. Outillage auxiliaire selon l'une quelconque des revendications précédentes, **caractérisé en ce qu'**il peut être muni d'un manche (23).

## Claims

1. Auxiliary tool for fitting a tyre (8) on a rim (9), more specifically to keep the bead (16) of the tyre (8) above the external edge (15) of the rim (9) and to push this bead (16) into the hollow of the rim (9), **characterised in that** it is primarily made up of a body with a primarily flat part, comprising at least three support points (X, Y, Z), two external prongs and a central part, and **in that** an external support point (X) is located on the other side of the axis (Q-Q'), which links the other external support point (Z) to the central support point with respect to the force (M) exerted by the tyre (8) on the tool (1).

2. Auxiliary tool according to claim 1, **characterised in that** it is primarily made up of a body in the form of a fork or in the form of a comb, comprising at least three prongs (3) whose ends (4) act as support points (X, Y, Z).

3. Auxiliary tool according to claim 2, **characterised in that**, with respect to the free end (4) of the median prong (3), the end (4) of an external prong (3) is located in a position more or less diametrically opposite the point of application of the force (M) exerted by the tyre on the tool.

4. Auxiliary tool according to the previous claims 2 or 3, **characterised in that** the median prong (3) is shorter than the external prongs (3).

5. Auxiliary tool according to the previous claims 2 or 3, **characterised in that** the support points (X, Y, Z) are located on an imaginary circumference (5) whose radius (R) is of the order of magnitude of the radius of the circumference ofthe rim (9) on which the tyre (8) must be mounted.

6. Auxiliary tool according to any of the previous claims, **characterised in that** the free end (4) of one of the prongs (3) is located outside the plane determined by the two other prongs (3).

7. Auxiliary tool according to the previous claims 2-6, **characterised in that** the external prong (3) forms an angle (A) with the plane that is determined by the other prongs (3).

8. Auxiliary tool according to any of the previous claims, **characterised in that** the external prongs (3) diverge.

9. Auxiliary tool according to any of the previous claims, **characterised in that** one of the external prongs (3) takes on a curved form that matches a circle segment whose radius (R) is of the order of magnitude ofthe radius of the rim (9) on which the tyre (8) must be mounted.

10. Auxiliary tool according to any ofthe previous claims, **characterised in that** the prongs (3) are at least partly fitted with a protective covering (6) in rubber or similar.

11. Auxiliary tool according to any of the previous claims, **characterised in that** it is an auxiliary hand tool.

12. Auxiliary tool according to any of the previous claims, **characterised in that** it can be fitted with a handle (23).

## Patentansprüche

1. Hilfswerkzeug für die Montage eines Reifens (8) auf eine Felge (9), genauer gesagt, um den Reifenwulst (16) des Reifens über dem Außenrand (15) der Felge (9) zu halten und diesen Reifenwulst (16) in der Vertiefung der Felge (9) zu versenken, **dadurch gekennzeichnet dass** das Hilfswerkzeug im Wesentlichen besteht aus einem Körper mit einem hauptsächlich flachen Teil, der mindestens drei Auflagepunkte (X, Y, Z) - zwei äußere Zacken sowie ein mittlerer Teil - umfasst, und dass der äußere Auflagepunkt (X) sich auf der gegenüberliegenden Seite der Achse (Q-Q')befindet, die den anderen äußeren Auflagepunkt (Z) symmetrisch zur Kraft (M), die vom Reifen (8) auf das Werkzeug (1) ausgeübt wird, mit dem mittleren Auflagepunkt verbindet.

2. Hilfswerkzeug nach Anspruch 1, **dadurch gekennzeichnet dass** es hauptsächlich aus einem Körper in Form einer Gabel oder eines Kamms mit mindestens drei Zacken (3) besteht, deren Enden (4) als Auflagepunkte (X, Y, Z) fungieren.

3. Hilfswerkzeug nach Anspruch 2, **dadurch gekennzeichnet, dass** gegenüber dem freien Ende (4) des mittleren Zackens (3) das Ende (4) eines äußeren Zackens (3) mehr oder weniger in einer diametral entgegengesetzten Position zum Angriffspunkt der Kraft (M) zu liegen kommt, die vom Reifen (8) auf das Werkzeug (1) ausgeübt wird.

4. Hilfswerkzeug nach Anspruch 2 oder 3, **dadurch gekennzeichnet, dass** der mittlere Zacken (3) kürzer ist als die äußeren Zacken (3).

5. Hilfsmittel nach Anspruch 2 oder 3, **dadurch gekennzeichnet, dass** sich die Auflagepunkte (X, Y, Z) auf einem imaginären Kreis (5) befinden, dessen Radius (R) der Größenordnung des Radius des Umfangs der Felge (9) entspricht, auf der der Reifen (8) montiert werden muss.

6. Hilfswerkzeug laut einer beliebigen der vorgenannten Ansprüche, **dadurch gekennzeichnet, dass** sich das freie Ende (4) eines der Zacken außerhalb der Ebene befindet, die von den beiden anderen Zacken (3) bestimmt wird.

7. Hilfswerkzeug nach den vorgenannten Ansprüche 2 bis 6, **dadurch gekennzeichnet, dass** der äußere Zacken (3) mit der Ebene, die von den anderen Zacken (3) bestimmt wird, einen Winkel (A) bildet.

8. Hilfswerkzeug nach einer beliebigen der vorgenannten Ansprüche, **dadurch gekennzeichnet, dass** die äußeren Zacken (3) auseinander laufen.

9. Hilfswerkzeug nach einer beliebigen der vorgenannten Ansprüche, **dadurch gekennzeichnet, dass** einer der äußeren Zacken (3) eine gebogene Form annimmt, die sich an die Form eines Kreissegments anpasst, dessen Radius (R) der Größenordnung des Radius des Umfangs der Felge (9) entspricht, auf der der Reifen (8) montiert werden muss.

10. Hilfswerkzeug nach einer beliebigen der vorgenannten Ansprüche, **dadurch gekennzeichnet, dass** die Zacken (3) zumindest teilweise mit einer Schutzummantelung (6) aus Kautschuk oder analogem Material ausgerüstet sind.

11. Hilfswerkzeug nach einer beliebigen der vorgenannten Ansprüche, **dadurch gekennzeichnet, dass** es sich um ein manuelles Hilfswerkzeug handelt.

12. Hilfswerkzeug nach einer beliebigen der vorgenannten Ansprüche, **dadurch gekennzeichnet, dass** es mit einem Griff (23) ausgestattet werden kann.
